(19) Europäisches Patentamt
European Patent Office
Office européen des brevets

(11) Veröffentlichungsnummer: **0 354 872 B1**

# (12) EUROPÄISCHE PATENTSCHRIFT

(45) Veröffentlichungstag der Patentschrift: **13.09.95**

(51) Int. Cl.[6]: **C09B 35/35**, C09B 67/36, D21H 21/28

(21) Anmeldenummer: **89810534.1**

(22) Anmeldetag: **13.07.89**

Die Akte enthält technische Angaben, die nach dem Eingang der Anmeldung eingereicht wurden und die nicht in dieser Patentschrift enthalten sind.

## (54) Trisazofarbstoffe und Verfahren zum Färben von Papier.

(30) Priorität: **22.07.88 CH 2808/88**

(43) Veröffentlichungstag der Anmeldung:
**14.02.90 Patentblatt 90/07**

(45) Bekanntmachung des Hinweises auf die Patenterteilung:
**13.09.95 Patentblatt 95/37**

(84) Benannte Vertragsstaaten:
**BE CH DE ES FR GB IT LI**

(56) Entgegenhaltungen:
**DE-C- 72 392**
**FR-A- 2 332 310**
**US-A- 2 286 714**
**FR-A- 2 269 565**
**US-A- 2 112 920**
**US-A- 4 387 050**

(73) Patentinhaber: **CIBA-GEIGY AG**
**Klybeckstrasse 141**
**CH-4002 Basel (CH)**

(72) Erfinder: **Käser, Adolf, Dr.**
**Spitzackerstrasse 118**
**CH-4103 Bottmingen (CH)**

EP 0 354 872 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

An Farbstoffe, die zum Färben von Papier verwendet werden, werden heutzutage besondere Anforderungen gestellt: Die Farbstoffe sollen z.B. einen hohen Ausziehgrad unter den speziellen Färbebedingungen aufweisen, sie sollen Färbungen mit guten Nassechtheiten ergeben und sie sollen so gut löslich sein, dass die Herstellung flüssiger Handelsformen möglich ist. Diese Bedingungen werden von den z.Zt. erhältlichen blauen Papierfarbstoffen noch nicht in allen Belangen erfüllt.

Es wurden nun blaue Farbstoffe gefunden, die sich hervorragend zum Färben von Papier eignen und die genannten Anforderungen sehr gut erfüllen. Zudem ergeben die Farbstoffe sehr gute coloristische Ausbeuten.

Gegenstand der vorliegenden Erfindung ist ein Verfahren zum Färben von Papier, dadurch gekennzeichnet, dass man einen Farbstoff der Formel

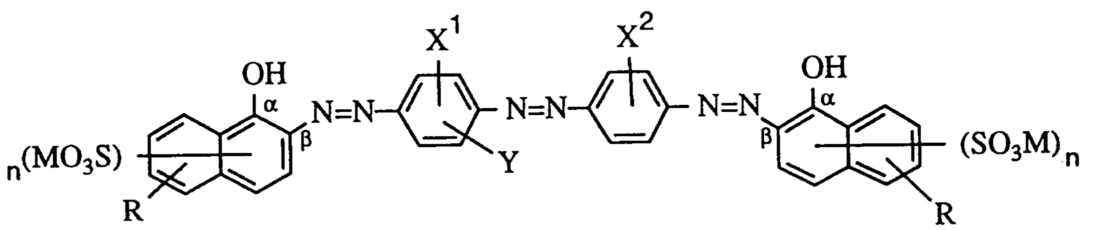

(1)

verwendet, worin

R Wasserstoff, -OH, $-OR^1$, $-NH_2$, $-NHR^1$, $-NHCOR^1$, $-NHSO_2R^1$, $-NHCONH_2$ oder $-NHCONHR^1$ bedeutet, wobei $R^1$ gegebenenfalls substituiertes Alkyl oder Aryl,

$X^1$ und $X^2$ unabhängig voneinander je Wasserstoff, gegebenenfalls substituiertes Alkyl oder Alkoxy, Halogen, Sulfo oder Carboxy,

Y gegebenenfalls substituiertes Alkyl oder Alkoxy, Halogen, Sulfo oder Carboxy,

M Wasserstoff oder ein Äquivalent eines farblosen Kations und

n 1 oder 2 bedeutet, wobei die OH-Gruppe in $\alpha$-Stellung und die Azogruppe in $\beta$-Stellung am Naphthalinkern miteinander vertauscht sein können.

Bedeutet $R^1$ Alkyl, so handelt es sich um gegebenenfalls substituiertes unverzweigtes oder verzweigtes Alkyl oder um Cycloalkyl. Cycloalkyl weist vorzugsweise 5 bis 8 C-Atome, offenkettiges Alkyl vorzugsweise 1 bis 8 C-Atome auf.

Als unverzweigtes oder verzweigtes offenkettiges Alkyl kommen z.B. in Frage: Methyl, Ethyl, n- und iso-Propyl, n-, sec.- oder tert.Butyl, n-und iso-Pentyl, n- und iso-Hexyl oder 2-Ethylhexyl.

Diese Alkylreste können ein- oder mehrmals substituiert sein, beispielsweise durch $C_1$-$C_4$-Alkoxy, durch OH substituiertes $C_1$-$C_4$-Alkoxy, Phenyl, Phenoxy oder Phenylaminocarbonyl, wobei die Phenylgruppe in den drei letztgenannten Resten z.B. durch $C_1$-$C_4$-Alkyl, $C_1$-$C_4$-Alkoxy oder Phenoxy substituiert sein kann. Geeignete Reste dieser Art sind z.B.: Hydroxyethyl, 1-Hydroxy-isopropyl, Ethoxymethyl, 2-Hydroxyethoxypentyl, Benzyl, 1-Phenylethyl, 2-Phenylethyl, 1-Methyl-2-phenylethyl, 1-iso-Butyl-3-phenylpropyl, 1,5-Diphenylpentyl-3, 1-Methyl-2-phenoxyethyl oder 1-Methyl-2-phenylaminocarbonyl-ethyl.

Bedeutet $R^1$ gegebenenfalls substituiertes $C_5$-$C_8$-Cycloalkyl, so handelt es sich vor allem um Cyclopentyl und Cyclohexyl; als Substituenten kommen vor allem $C_1$-$C_4$-Alkyl, insbesondere Methyl, in Frage.

Bedeutet $R^1$ Aryl, so handelt es sich vor allem um Naphthyl und insbesondere um Phenyl, wobei diese Reste substituiert sein können, z.B. durch Sulfo, Carboxy, $C_1$-$C_4$-Alkyl, $C_1$-$C_4$-Alkoxy, Halogen, wie Fluor, Chlor oder Brom, Nitro, $C_1$-$C_4$-Alkylcarbonylamino oder $C_1$-$C_4$-Alkoxycarbonyl.

Vorzugsweise bedeutet $R^1$ unsubstituiertes $C_1$-$C_4$-Alkyl oder Phenyl.

Bedeutet $X^1$, $X^2$ oder Y Halogen, so handelt es sich um Fluor, Brom oder vor allem um Chlor.

Als Alkyl kommen für $X^1$, $X^2$ und Y die weiter oben für $R^1$ genannten Alkylreste in Betracht. Geeignete Alkoxyreste sind die genannten Alkylreste, welche über -O- an die Phenylenringe gebunden sind.

Bevorzugte Bedeutungen für $X^1$ und $X^2$ sind Wasserstoff, $C_1$-$C_4$-Alkyl oder -Alkoxy, Chlor oder Sulfo, wobei Wasserstoff, Methyl und Methoxy besonders bevorzugt sind.

Y bedeutet vorzugsweise $C_1$-$C_4$-Alkyl oder -Alkoxy, Chlor oder Sulfo, wobei Methyl und Methoxy besonders bevorzugt sind.

M bedeutet Wasserstoff oder ein Aequivalent eines farblosen Kations, beispielsweise Lithium, Natrium, Kalium, Ammonium oder die protonierte Form eines $C_4$-$C_{12}$-Trialkylamins, $C_4$-$C_{12}$-Diamins oder $C_2$-$C_{12}$-

Alkanolamins.

Bei M in der Bedeutung eines protonierten $C_4$-$C_{12}$-Trialkylamins kann es sich z.B. um protoniertes N-Ethyldimethylamin, N,N-Diethylmethylamin, Tri-n-propylamin, Tri-n-butylamin, Tri-isobutylamin und insbesondere um Triethylamin oder Tri-isopropylamin handeln; geeignet sind auch Gemische verschiedener protonierter Amine.

Hat M die Bedeutung protoniertes $C_4$-$C_{12}$-Diamin, handelt es sich z.B. um ein Ethylendiamin oder 1,3-Diaminopropan, bei dem eines oder beide N-Atome zusätzlich mit einem oder zwei $C_1$-$C_4$-Alkylresten, vorzugsweise Methyl- oder Ethylresten, substituiert sind. M stellt hierbei bevorzugt ein N,N-Dialkylethylendiamin oder N,N-Dialkyl-1,3-diaminopropan dar.

Beispiele sind: N-Ethylethylendiamin, N,N-Dimethylethylendiamin, N,N'-Dimethylethylendiamin, N,N-Diethylethylendiamin, 3-Dimethylamino-1-propylamin oder 3-Diethylamino-1-propylamin.

Steht M für ein protoniertes $C_2$-$C_{12}$-Alkanolamin, so kann es sich z.B. um die protonierte Form eines Monoalkanol-, Dialkanol-, Monoalkanolmonoalkyl-, Monoalkanoldialkyl-, Dialkanolalkyl- oder Trialkanolamins oder um ein Gemisch verschiedener protonierter Alkanolamine handeln. Beispiele sind protoniertes 2-Aminoethanol, Di-(2-hydroxyethyl)-amin, N-(2-Hydroxyethyl)-dimethylamin, N-(2-Hydroxyethyl)-diethylamin, N,N-Di-(2-hydroxyethyl)-methylamin, N,N-Di-(2-hydroxyethyl)-ethylamin oder Tri-(2-hydroxyethyl)-amin, 2-Aminoethoxyethanol oder Diethylaminopropylamin.

Vorzugsweise hat M die Bedeutung $Na^⊕$, $Li^⊕$ oder protoniertes $C_4$-$C_6$-Alkanolamin, wobei bei den $C_4$-$C_6$-Alkanolaminen Tri-(2-hydroxyethyl)-amin, Di-(2-hydroxyethyl)-amin oder ein Gemisch dieser beiden Amine bevorzugt ist.

Bevorzugte erfindungsgemäss verwendete Farbstoffe der Formel (1) sind solche, worin R Wasserstoff, OH oder $NH_2$ bedeutet.

Ausserdem sind solche Farbstoffe der Formel (1) bevorzugt, worin die -OH-Gruppen in $\alpha$-Stellung und die Azogruppen in $\beta$-Stellung der Naphthalinkerne angeordnet sind.

Besonders bevorzugt verwendete Farbstoffe entsprechen der Formel

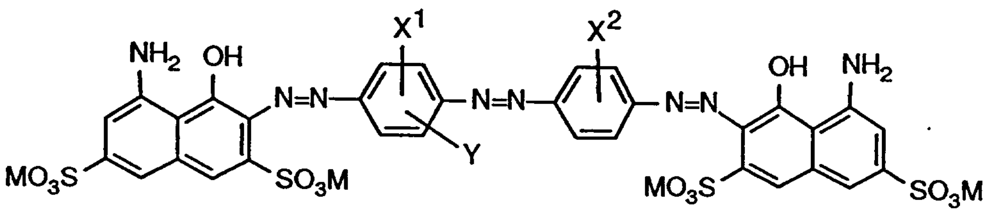

(2),

worin $X^1$, $X^2$ und Y die unter der Formel (1) angegebene Bedeutung aufweisen und M $Na^⊕$, $Li^⊕$ oder protoniertes $C_4$-$C_6$-Alkanolamin bedeutet.

Unter diesen sind die Farbstoffe der Formel

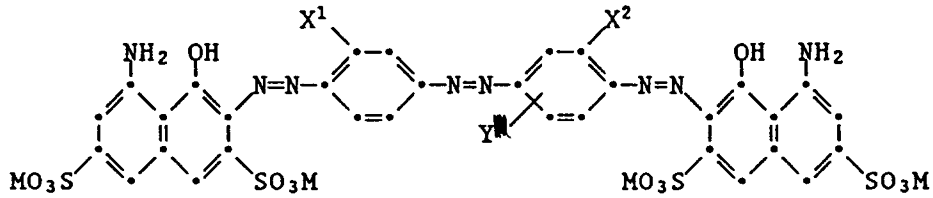

(3)

besonders interessant. In der Formel (3) bedeuten $X^1$ und $X^2$ unabhängig voneinander je Wasserstoff, Methyl oder Methoxy, Y bedeutet Methyl oder Methoxy und M bedeutet $Na^⊕$, $Li^⊕$ oder protoniertes $C_4$-$C_6$-Alkanolamin.

Die Farbstoffe der Formeln (1) bis (3) werden auf an sich bekannte Art und Weise hergestellt, beispielsweise indem man ein entsprechend substituiertes 4,4'-Diaminoazobenzol tetrazotiert und auf eine Naphtholsulfonsäure kuppelt.

Ein weiterer Gegenstand der vorliegenden Erfindung sind die Farbstoffe der oben angegebenen Formeln (2) oder (3).

Die Farbstoffe der Formel (1) können in fester oder flüssiger Form zum Färben von Papier eingesetzt werden.

Als Pulver oder Granulat werden die Farbstoffe insbesondere bei der diskontinuierlichen Massefärbung verwendet, sobei der Farbstoff chargenweise im Pulper, Holländer oder in der Mischbütte zugesetzt wird.

Dabei werden die Farbstoffe vorzugsweise als Farbstoffzubereitungen verwendet, die Coupagemittel, z.B. Harnstoff als Lösungsvermittler, Dextrine, Glaubersalz, Kochsalz sowie Dispergatoren, Entstäubungsmittel und Sequestriermittel, wie Tetranatriumpyrophosphat, enthalten können.

Ein weiterer Gegenstand der Erfindung sind somit feste Farbstoffzubereitungen zum Färben von Papier, welche Farbstoffe der Formel (2) oder (3) enthalten.

In den letzten Jahren hat die Verwendung von konzentrierten wässrigen Lösungen von Farbstoffen an Bedeutung gewonnen, und zwar wegen der Vorteile, die solche Lösungen gegenüber Farbstoffen in Pulverform besitzen. Durch die Verwendung von Lösungen werden die mit der Staubbildung verbundenen Schwierigkeiten vermieden und die Verbraucher von der zeitraubenden und oftmals schwierigen Auflösung des Farbstoffpulvers in Wasser befreit. Die Verwendung von konzentrierten Lösungen wurde ausserdem durch die Entwicklung von kontinuierlichen Färbeverfahren für Papier angeregt, da es bei diesen Verfahren zweckmässig ist, die Lösung direkt in den Holländer zu geben oder an irgendeinem anderen geeigneten Punkt der Papierherstellung zuzufügen.

Ein weiterer Gegenstand der Erfindung sind daher konzentrierte wässrige Lösungen von Farbstoffen der Formel (2) oder (3), welche dadurch gekennzeichnet sind, dass sie mindestens 10, beispielsweise 10 bis 30 Gewichtsprozent Farbstoff, bezogen auf das Gesamtgewicht der Lösung, enthalten.

Vorzugsweise enthalten die Lösungen 20 bis 30 Gew.% Farbstoff.

Konzentrierte wässrige Lösungen von Farbstoffen der Formel (1) können z.B. hergestellt werden, indem man die bei der Herstellung des Farbstoffes anfallende Farbstoffsuspension filtriert, gegebenenfalls entsalzt, z.B. durch ein Membrantrennverfahren und durch Zusatz von Hilfsmitteln, wie Harnstoff, ε-Caprolactam oder Polyethylenglykol stabilisiert. Man kann aber auch den isolierten Farbstoff in Salzsäure anschlämmen, erneut filtrieren und den Filterkuchen mit Lithiumhydroxid oder einem geeigneten Amin, z.B. einem Alkanolamin, und der nötigen Menge Wasser vermischen. Schliesslich kann man auch die Kupplung in Gegenwart von LiOH, Ammoniak oder Alkanolamin durchführen und die Syntheselösung anschliessend entsalzen. Derartige Farbstofflösungen eignen sich zum Färben einer Papierpulpe in Anwesenheit von Kollophonium und Alaunschlichte.

Die so hergestellten Farbstofflösungen enthalten vorzugsweise auf 100 Teile Farbstoff in Form der freien Säure 400 bis 900 Teile Wasser, 0 bis 200 Teile weitere Zusätze wie Harnstoff, ε-Caprolactam oder Polyethylenglykol sowie soviel Base, dass der pH-Wert zwischen 7 und 10 liegt. Als Base kommen z.B. NaOH, LiOH, Ammoniak oder organische Amine, z.B. Alkanolamine in Betracht.

Die erfindungsgemässen wässrigen Konzentrate, die bei Lagerungstemperaturen bis zu -5 °C stabil sind, eignen sich zum Färben von Papier, auf welchem sie mit oder ohne Verwendung einer Schlichte attraktive blaue Farbtöne ergeben.

Es sind bereits Farbstoffe bekannt, welche den erfindungsgemässen Farbstoffen der Formel (1) ähnlich sind, jedoch wurde deren Verwendung zum Färben von Papier nicht in Betracht gezogen. Gegenüber den bekannten blauen Papierfarbstoffen zeichnen sich die erfindungsgemäss verwendeten Farbstoffe der Formel (1) dadurch aus, dass sie auf Papier Färbungen mit besseren coloristischen Ausbeuten ergeben.

Die FR-A-2332310 beschreibt bereits das Färben von Papier mit Farbstoffen, die jedoch aufgrund der Synthese symmetrisch sind und zudem immer erhebliche Anteile an Azoxygruppen enthalten.

In den nachfolgenden Beispielen bedeuten die Teile Gewichtsteile, und die Temperaturen sind in Celsiusgraden angegeben.

Beispiel 1: Man bereitet eine Lösung der Kupplungskomponente, indem man 70,2 Teile 1-Amino-8-naphthol-3,6-disulfonsäure in Form des Natriumsalzes bei einem pH-Wert von 7 - 8 in 250 Teilen Wasser löst. Dann werden 22,6 Teile 4,4'-Diamino-2-methylazobenzol in 250 Teilen Wasser und 55 Teilen Salzsäure 32 % durch Zugabe von 52 Vol.-Teilen 4N Natrium-nitritlösung bei einer Temperatur zwischen 0 und 5 °C diazotiert und innerhalb von 1 Stunde zur vorstehend beschriebenen Lösung der Kupplungskomponente getropft. Der pH-Wert wird dabei durch Zugabe von 4N Natronlauge zwischen 8 und 9 gehalten. Der so erhalten Farbstoff der Formel

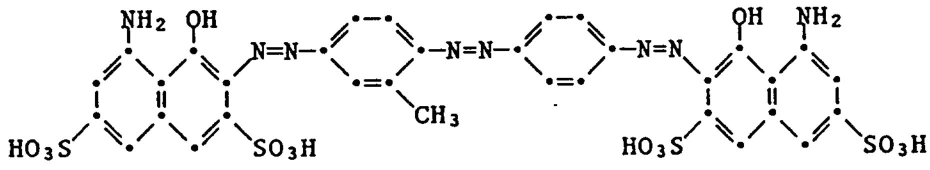

wird durch Aussalzen mit NaCl als Na-Salz isoliert. Es färbt Papier in brillanten blauen Tönen. Der anfallende Presskuchen kann direkt zu flüssigen Präparationen verarbeitet werden. Die färberischen

Eigenschaften auf Papier sind ausgezeichnet. Besonders hervorzuheben ist das gute Ausziehvermögen auf Papier.

Beispiel 2: 200 Teile des Farbstoffes aus Beispiel 1 werden in Form der freien salzarmen Farbstoffsäure in 500 Teilen Wasser homogen verrührt und durch Zugabe von 75 Teilen Diethanolamin und 100 Teilen Harnstoff bei 40° gelöst. Die Lösung wird unter Zusatz eines Filterhilfsmittels klär-filtriert. Das Filtrat lässt man auf Raumtemperatur abkühlen und stellt es mit Wasser auf 1000 Teile ein. Man erhält eine stabile Farbstofflösung, welche eine flüssige Handelsform darstellt.

Anstelle von Diethanolamin können auch Monoethanolamin, Triethanolamin, 2-(2-Aminoethoxy)-ethanol, Polyglykolamin, wie sie in der DE-A-2.061.760 beschrieben sind, Ammoniak, Tetramethylammoniumhydroxid, Lithiumhydroxid oder Lithiumcarbonat eingesetzt werden.

Beispiel 3: Eine flüssige Handelsform des Farbstoffs aus Beispiel 1 als Lithium-Salz wird folgendermassen hergestellt:

70,2 Teile 1-Amino-8-naphthol-3,6-disulfonsäure werden in 400 Teilen Wasser unter Zugabe von so viel LiOH, dass sich ein pH-Wert von 7-8 einstellt, gelöst. Zu dieser Lösung tropft man innerhalb von einer Stunde bei 5-10°C die im Beispiel 1 beschriebene Tetrazokomponente. Der pH-Wert wird dabei durch Zugabe von 3N LiOH-Lösung zwischen 8 und 9 gehalten.

Die resultierende Farbstofflösung wird mit einer üblichen Membrane unter üblichen Bedingungen durch Umkehrosmose entsalzt und anschliessend auf ein Gewicht von 600 g aufkonzentriert.

Man erhält eine stabile Farbstofflösung. Diese kann gewünschtenfalls durch Zusatz von Amiden, z.B. Harnstoff oder ε-Caprolactam, in Mengen von ca. 30 bis 120 g in ihren rheologischen Eigenschaften verändert werden.

Beispiele 4 - 55: Flüssige Handelsformen weiterer Farbstoffe können in der in den Beispielen 1 bis 3 beschriebenen Weise erhalten werden, wenn man anstelle der im Beispiel 1 verwendeten Tetrazo- bzw. Kupplungskomponente die in der folgenden Tabelle in Spalte 2 bzw. 3 aufgeführten verwendet. Die Farbstoffe färben Papier in der in der letzten Spalte angegebenen Nuance.

| Beispiel | Tetraazokomponente | Kupplungskomponente | Nuance auf Papier |
|---|---|---|---|
| 4 | 4,4'-Diamino-2-methyl-azobenzol | 1-Amino-8-hydroxynaphthalin-2,4-disulfonsäure | blau |
| 5 | 4,4'-Diamino-2-methyl-azobenzol | 1-Amino-8-hydroxynaphthalin-4,6-disulfonsäure | blau |
| 6 | 4,4'-Diamino-2-methyl-azobenzol | 1,8-Dihydroxynaphthalin-3,6-disulfonsäure | blau |
| 7 | 4,4'-Diamino-2-methyl-azobenzol | 1-Hydroxynaphthalin-3,6-disulfonsäure | rotstichig blau |
| 8 | 4,4'-Diamino-2-methyl-azobenzol | 1-Hydroxynaphthalin-3,8-disulfonsäure | rotstichig blau |
| 9 | 4,4'-Diamino-2-methyl-azobenzol | 2-Hydroxynaphthalin-5,7-disulfonsäure | violett |
| 10 | 4,4'-Diamino-2-methyl-azobenzol | 2-Hydroxynaphthalin-6,8-disulfonsäure | violett |
| 11 | 4,4'-Diamino-2-methyl-azobenzol | 2-Hydroxynaphthalin-3,6-disulfonsäure | violett |

| Beispiel | Tetraazokomponente | Kupplungskomponente | Nuance auf Papier |
|---|---|---|---|
| 12 | 4,4'-Diamino-2-methyl-azobenzol | 2-(3'-Sulfoanilino)-5-hydroxynaphthalin-7-sulfonsäure | rotstichig blau |
| 13 | 4,4'-Diamino-2-methyl-azobenzol | 2-Anilino-5-hydroxynaphthalin-7-sulfonsäure | rotstichig blau |
| 14 | 4,4'-Diamino-2-methoxy-azobenzol | 1-Amino-8-hydroxynaphthalin-3,6-disulfonsäure | blau |
| 15 | 4,4'-Diamino-2-methoxy-azobenzol | 1-Amino-8-hydroxynaphthalin-2,4-disulfonsäure | blau |
| 16 | 4,4'-Diamino-2-methoxy-azobenzol | 1-Amino-8-hydroxynaphthalin-4,6-disulfonsäure | blau |
| 17 | 4,4'-Diamino-2-methoxy-azobenzol | 1,8-Dihydroxynaphthalin-3,6-disulfonsäure | blau |
| 18 | 4,4'-Diamino-2-methoxy-azobenzol | 1-Hydroxynaphthalin-3,6-disulfonsäure | rotstichig blau |
| 19 | 4,4'-Diamino-2-methoxy-azobenzol | 1-Hydroxynaphthalin-3,8-disulfonsäure | rotstichig blau |
| 20 | 4,4'-Diamino-2-methoxy-azobenzol | 2-Hydroxynaphthalin-5,7-disulfonsäure | violett |
| 21 | 4,4'-Diamino-2-methoxy-azobenzol | 2-Hydroxynaphthalin-6,8-disulfonsäure | violett |
| 22 | 4,4'-Diamino-2-methoxy-azobenzol | 2-Hydroxynaphthalin-3,6-disulfonsäure | violett |
| 23 | 4,4'-Diamino-2-methoxy-azobenzol | 2-(3'-Sulfoanilino)-5-hydroxynaphthalin-7-sulfonsäure | blau |
| 24 | 4,4'-Diamino-2-methoxy-azobenzol | 2-Anilino-5-hydroxynaphthalin-7-sulfonsäure | rotstichig blau |
| 25 | 4,4'-Diamino-2,5-dimethyl-azobenzol | 1-Amino-8-hydroxynaphthalin-3,6-disulfonsäure | blau |
| 26 | 4,4'-Diamino-2,5-dimethyl-azobenzol | 1-Amino-8-hydroxynaphthalin-2,4-disulfonsäure | grünstichig blau |
| 27 | 4,4'-Diamino-2,5-dimethyl-azobenzol | 1-Amino-8-hydroxynaphthalin-4,6-disulfonsäure | blau |
| 28 | 4,4'-Diamino-2,5-dimethyl-azobenzol | 1,8-Dihydroxynaphthalin-3,6-disulfonsäure | blau |
| 29 | 4,4'-Diamino-2,5-dimethyl-azobenzol | 1-Hydroxynaphthalin-3,6-disulfonsäure | rotstichig blau |
| 30 | 4,4'-Diamino-2,5-dimethyl-azobenzol | 1-Hydroxynaphthalin-3,8-disulfonsäure | rotstichig blau |
| 31 | 4,4'-Diamino-2,5-dimethyl-azobenzol | 2-Hydroxynaphthalin-5,7-disulfonsäure | violett |
| 32 | 4,4'-Diamino-2,5-dimethyl-azobenzol | 2-Hydroxynaphthalin-6,8-disulfonsäure | violett |

| Beispiel | Tetraazokomponente | Kupplungskomponente | Nuance auf Papier |
|---|---|---|---|
| 33 | 4,4'-Diamino-2,5-dimethyl-azobenzol | 2-Hydroxynaphthalin-3,6-disulfonsäure | violett |
| 34 | 4,4'-Diamino-2,5-dimethyl-azobenzol | 2-(3'-Sulfoanilino)-5-hydroxynaphthalin-7-sulfonsäure | blau |
| 35 | 4,4'-Diamino-2,5-dimethyl-azobenzol | 2-Anilino-5-hydroxynaphthalin-7-sulfonsäure | blau |
| 36 | 4,4'-Diamino-2-methyl-5-methoxy-azobenzol | 1-Amino-8-hydroxynaphthalin-3,6-disulfonsäure | grünstichig blau |
| 37 | 4,4'-Diamino-2-methyl-5-methoxy-azobenzol | 1-Amino-8-hydroxynaphthalin-4,6,-disulfonsäure | blau |
| 38 | 4,4'-Diamino-2-methyl-5-methoxy-azobenzol | 1-Amino-8-hydroxynaphthalin-2,4-disulfonsäure | grünstichig blau |
| 39 | 4,4'-Diamino-2-methyl-5-methoxy-azobenzol | 1,8-Dihydroxynaphthalin-3,6-disulfonsäure | blau |
| 40 | 4,4'-Diamino-2-methyl-5-methoxy-azobenzol | 1-Hydroxynaphthalin-3,6-disulfonsäure | blau |
| 41 | 4,4'-Diamino-2-methyl-5-methoxy-azobenzol | 1-Hydroxynaphthalin-3,8-disulfonsäure | blau |
| 42 | 4,4'-Diamino-2-methyl-5-methoxy-azobenzol | 2-Hydroxynaphthalin-5,7-disulfonsäure | rotstichig blau |
| 43 | 4,4'-Diamino-2-methyl-5-methoxy-azobenzol | 2-Hydroxynaphthalin-6,8-disulfonsäure | rotstichig blau |
| 44 | 4,4'-Diamino-2-methyl-5-methoxy-azobenzol | 2-Hydroxynaphthalin-3,6-disulfonsäure | rotstichig blau |
| 45 | 4,4'-Diamino-2-methyl-5-methoxy-azobenzol | 2-(3'-Sulfoanilino)-5-hydroxynaphthalin-7-sulfonsäure | blau |
| 46 | 4,4'-Diamino-2-methyl-5-methoxy-azobenzol | 2-Anilino-5-hydroxynaphthalin-7-sulfonsäure | blau |
| 47 | 4,4'-Diamino-2,5-dimethoxy-azobenzol | 1-Amino-8-hydroxynaphthalin-3,6-disulfonsäure | grünstichig blau |
| 48 | 4,4'-Diamino-2,5-dimethoxy-azobenzol | 1,8-Dihydroxynaphthalin-3,6-disulfonsäure | grünstichig blau |
| 49 | 4,4'-Diamino-2,5-dimethoxy-azobenzol | 1-Hydroxynaphthalin-3,6-disulfonsäure | blau |

| Beispiel | Tetraazokomponente | Kupplungskomponente | Nuance auf Papier |
|---|---|---|---|
| 50 | 4,4'-Diamino-3-methyl-azobenzol | 1-Amino-8-hydroxynaphthalin-3,6-disulfonsäure | blau |
| 51 | 4,4'-Diamino-3-methyl-azobenzol | 1,8-Dihydroxynaphthalin-3,6-disulfonsäure | blau |
| 52 | 4,4'-Diamino-3-methyl-azobenzol | 1-Hydroxynaphthalin-3,6-disulfonsäure | rotstichig blau |
| 53 | 4,4'-Diamino-3-methoxy-azobenzol | 1-Amino-8-hydroxynaphthalin-3,6-disulfonsäure | blau |
| 54 | 4,4'-Diamino-3-methoxy-azobenzol | 1,8-Dihydroxynaphthalin-3,6-disulfonsäure | blau |
| 55 | 4,4'-Diamino-3-methoxy-azobenzol | 1-Hydroxynaphthalin-3,6-disulfonsäure | rotstichig blau |

Beispiel 56: In einem Holländer werden 70 Teile chemisch gebleichte Sulfitzellulose (aus Nadelholz) und 30 Teile chemisch gebleichte Sulfitzellulose (aus Birkenholz) in 2000 Teilen Wasser gemahlen. Zu dieser Masse gibt man 2,5 Teile der im Beispiel 2 beschriebenen Farbstofflösung. Nach 20 Minuten Mischzeit wird aus dieser Masse Papier hergestellt. Das auf diese Weise erhaltene saugfähige Papier ist blau gefärbt. Das Abwasser ist praktisch farblos.

Beispiel 57: 0,5 Teile des Farbstoffpulvers aus Beispiel 1 werden in 100 Teilen heissem Wasser gelöst und die Lösung auf Raumtemperatur abgekühlt. Diese Lösung gibt man zu 100 Teilen chemisch gebleichter Sulfitzellulose, die mit 2000 Teilen Wasser in einem Holländer gemahlen wurden. Nach 15 Minuten Durchmischung wird auf übliche Art mit Harzleim und Aluminiumsulfat geleimt. Papier, das aus diesem Stoff hergestellt wird, besitzt eine blaue Nuance mit guten Nassechtheiten.

Beispiel 58: 97 g des gemäss Beispiel 1 erhaltenen Farbstoff-Na-Salzes werden in 600 ml Wasser angerührt und bei 50° mit 160 ml Nitrobenzol, 81.4 g Tributylamin und 44 ml HCl 32 % versetzt. Man verrührt bei 70°, bis der Farbstoff vollständig in die organische Phase übergegangen ist. Die wässrige Phase wird verworfen und die organische Phase wird zweimal mit je 600 ml heissem Wasser gewaschen. Dann werden 300 ml Wasser und 80,0 g Triethanolamin zugegeben und das Gemisch bei 85° verrührt, bis der Farbstoff vollständig in die wässrige Phase übergegangen ist. Die wässrige Phase wird durch Wasserdampfdestillation von Spuren Nitrobenzol und Tributylamin befreit. Man erhält eine stabile Farbstofflösung. Die organische Phase wird für weitere Extraktionen eingesetzt.

**Patentansprüche**

**1.** Verfahren zum Färben von Papier, dadurch gekennzeichnet, dass man einen Farbstoff der Formel

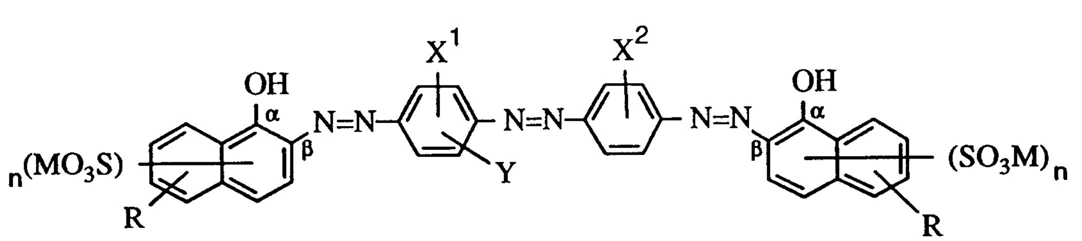

(1)

verwendet, worin

R Wasserstoff, -OH, $-OR^1$, $-NH_2$, $-NHR^1$, $-NHCOR^1$, $-NHSO_2R^1$, $-NHCONH_2$ oder $-NHCONHR^1$ bedeutet, wobei $R^1$ gegebenenfalls substituiertes Alkyl oder Aryl,

$X^1$ und $X^2$ unabhängig voneinander je Wasserstoff, gegebenenfalls substituiertes Alkyl oder Alkoxy, Halogen, Sulfo oder Carboxy,

Y gegebenenfalls substituiertes Alkyl oder Alkoxy, Halogen, Sulfo oder Carboxy,

M Wasserstoff oder ein Äquivalent eines farblosen Kations und

n 1 oder 2 bedeutet, wobei die OH-Gruppe in $\alpha$-Stellung und die Azogruppe in $\beta$-Stellung am Naphthalinkern miteinander vertauscht sein können.

**2.** Verfahren gemäss Anspruch 1, dadurch gekennzeichnet, dass man einen Farbstoff der Formel (1) verwendet, worin R Wasserstoff, -OH oder $-NH_2$ bedeutet.

**3.** Verfahren gemäss Anspruch 1, dadurch gekennzeichnet, dass man einen Farbstoff der Formel (1) verwendet, worin die OH-Gruppen in $\alpha$-Stellung und die Azogruppen in $\beta$-Stellung angeordnet sind.

**4.** Verfahren gemäss einem der Ansprüche 1 bis 3, dadurch gekennzeichnet, dass man einen Farbstoff der Formel (1) verwendet, worin $X^1$ und $X^2$ unabhängig voneinander je Wasserstoff, Methyl oder Methoxy und Y Methyl oder Methoxy bedeuten.

**5.** Verfahren gemäss Anspruch 1, dadurch gekennzeichnet, dass man einen Farbstoff der Formel

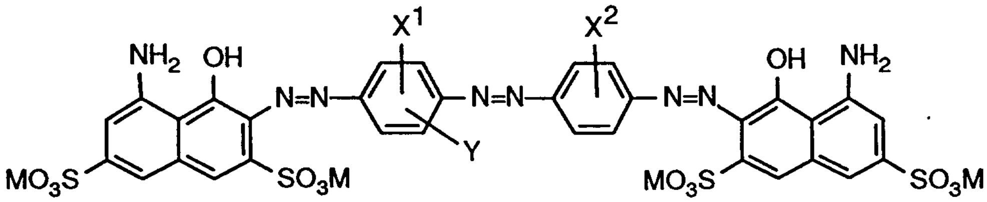

(2),

verwendet, worin $X^1$, $X^2$ und Y die im Anspruch 1 angegebene Bedeutung aufweisen und M $Na^{\oplus}$, $Li^{\oplus}$ oder protoniertes $C_4$-$C_6$-Alkanolamin bedeutet.

**6.** Verfahren gemäss Anspruch 1, dadurch gekennzeichnet, dass man einen Farbstoff der Formel

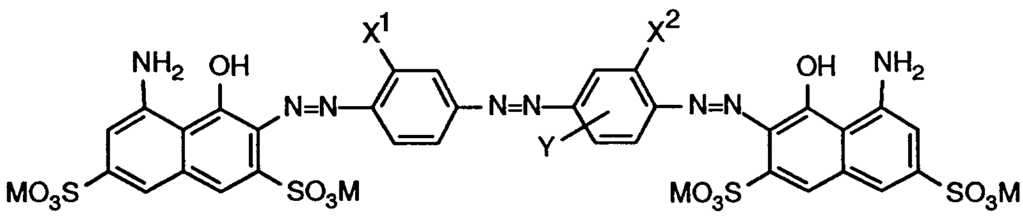

(3)

verwendet, worin $X^1$ und $X^2$ unabhängig voneinander je Wasserstoff, Methyl oder Methoxy bedeuten, Y Methyl oder Methoxy ist und M $Na^{\oplus}$, $Li^{\oplus}$ oder protoniertes $C_4$-$C_6$-Alkanolamin bedeutet.

**7.** Farbstoffe der Formel

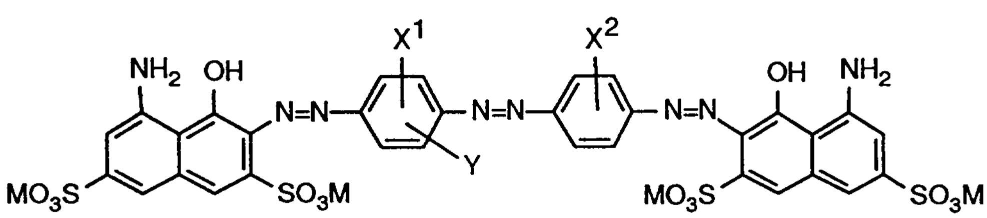

(2),

worin $X^1$, $X^2$ und Y die im Anspruch 1 angegebene Bedeutung aufweisen und M $Na^{\oplus}$, $Li^{\oplus}$ oder protoniertes $C_4$-$C_6$-Alkanolamin bedeutet.

**8.** Farbstoffe der Formel

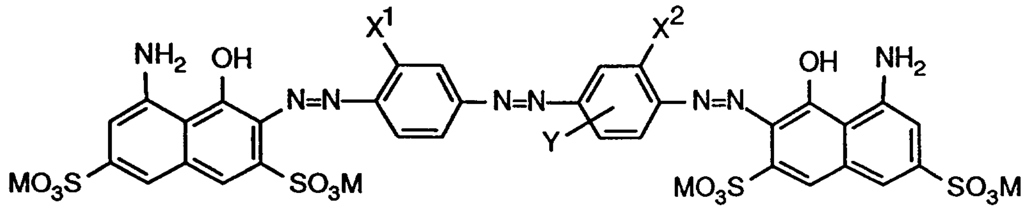

(3)

worin $X^1$ und $X^2$ unabhängig voneinander je Wasserstoff, Methyl oder Methoxy bedeuten, Y Methyl oder Methoxy ist und M $Na^{\oplus}$, $Li^{\oplus}$ oder protoniertes $C_4$-$C_6$-Alkanolamin bedeutet.

**9.** Feste Farbstoffzubereitungen zum Färben von Papier, welche Farbstoffe der Formel (2) oder (3) gemäss den Ansprüchen 7 oder 8 enthalten.

**10.** Konzentrierte wässrige Lösungen von Farbstoffen der Formel (2) oder (3), dadurch gekennzeichnet, dass sie 10 bis 30 Gewichtsprozent Farbstoff, bezogen auf das Gesamtgewicht der Lösung, enthalten.

**11.** Konzentrierte wässrige Lösungen gemäss Anspruch 10, dadurch gekennzeichnet, dass sie 20 bis 30 Gewichtsprozent Farbstoff enthalten.

**12.** Konzentrierte wässrige Lösungen gemäss Ansprüchen 10 oder 11, dadurch gekennzeichnet, dass der Farbstoff in Form eines Lithium- oder Alkanolaminsalzes, insbesondere eines Diäthanolamin- oder Triäthanolaminsalzes, vorliegt.

**13.** Verwendung von festen Farbstoffzubereitungen oder konzentrierten wässrigen Lösungen gemäss den Ansprüchen 9 bis 12 zum Färben von Papier.

**14.** Das nach dem Verfahren gemäss Anspruch 1 gefärbte Papier.

**Claims**

**1.** A process for dyeing paper, which comprises the use of a dye of formula

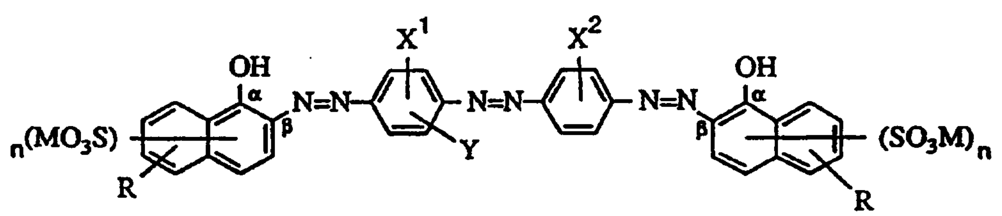

(1)

in which
R is hydrogen, -OH, $-OR^1$, $-NH_2$, $-NHR^1$, $-NHCOR^1$, $-NHSO_2R^1$, $-NHCONH_2$ or $-NHCONHR^1$, in which $R^1$ is unsubstituted or substituted alkyl or aryl, $X^1$ and $X^2$ are each independently of the other hydrogen, unsubstituted or substituted alkyl or alkoxy, or halogen, sulfo, or carboxyl,
Y is unsubstituted or substituted alkyl or alkoxy, or halogen, sulfo or carboxyl,
M is hydrogen or one equivalent of a colourless cation, and
n is 1 or 2,
and the OH group in the $\alpha$-position and the azo group in the $\beta$-position of the naphthalene nucleus are mutually interchangeable.

**2.** A process according to claim 1, wherein a dye of formula (1) is used in which R is hydrogen, -OH or $-NH_2$.

3. A process according to claim 1, wherein a dye of formula (1) is used in which the OH groups are in the $\alpha$-position and the azo groups are in the $\beta$-position.

4. A process according to any one of claims 1 to 3, wherein a dye of formula (1) is used in which $X^1$ and $X^2$ are each independently of the other hydrogen, methyl or methoxy, and Y is methyl or methoxy.

5. A process according to claim 1, wherein a dye of formula

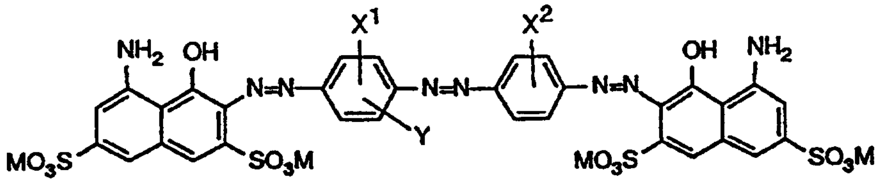

(2),

is used in which $X_1$, $X_2$ and Y are as defined in claim 1 and M is $Na^{\oplus}$, $Li^{\oplus}$ or protonated $C_4$-$C_6$ alkanolamine.

6. A process according to claim 1, wherein a dye of formula

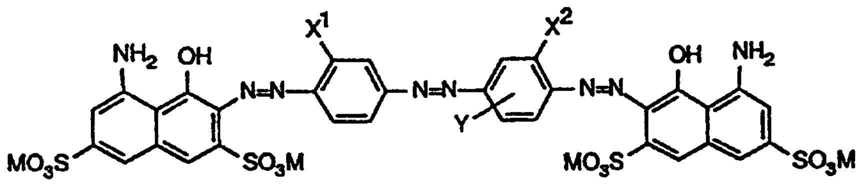

(3)

is used in which $X^1$ and $X^2$ are each independently of the other hydrogen, methyl or methoxy, Y is methyl or methoxy, and M is $Na^{\oplus}$, $Li^{\oplus}$ or protonated $C_4$-$C_6$ alkanolamine.

7. A dye of formula

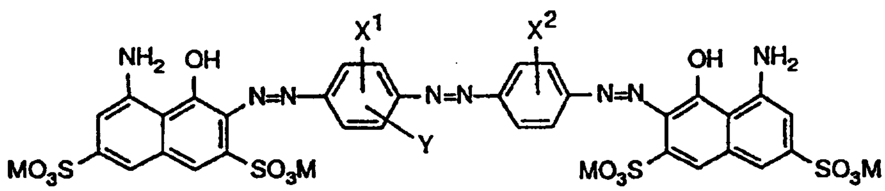

(2),

is used in which $X^1$, $X^2$ and Y are as defined in claim 1 and M is $Na^{\oplus}$, $Li^{\oplus}$ or protonated $C_4$-$C_6$ alkanolamine.

8. A dye of formula

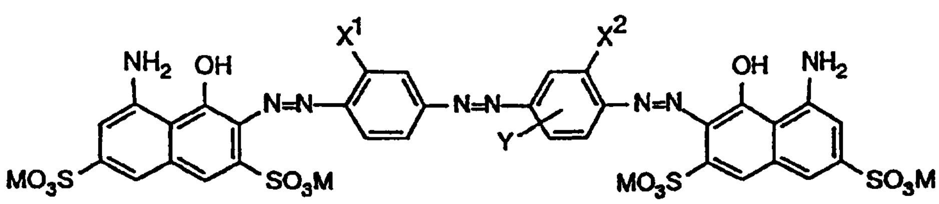

(3)

is used in which $X^1$ and $X^2$ are each independently of the other hydrogen, methyl or methoxy, Y is methyl or methoxy, and M is $Na^{\oplus}$, $Li^{\oplus}$ or protonated $C_4$-$C_6$ alkanolamine.

9. A solid dye formulation for dyeing paper, which contains a dye of formula (2) or (3) according to claim 7 or 8.

10. A concentrated aqueous solution of a dye of formula (2) or (3), which solution contains 10 to 30 percent by weight of dye, based on the total weight of the solution.

11. A concentrated aqueous solution according to claim 10, which contains 20 to 30 percent by weight of dye.

12. A concentrated aqueous solution according to claim 10 or 11, wherein the dye is in the form of a lithium or alkanolamine salt, especially of a diethanolamine or triethanolamine salt.

13. The use of a solid dye formulation or of a concentrated aqueous solution as claimed in any one of claims 9 to 12 for dyeing paper.

14. Paper dyed by a process according to claim 1.

**Revendications**

1. Procédé de teinture de papier, **caractérisé** en ce que l'on utilise un colorant de formule

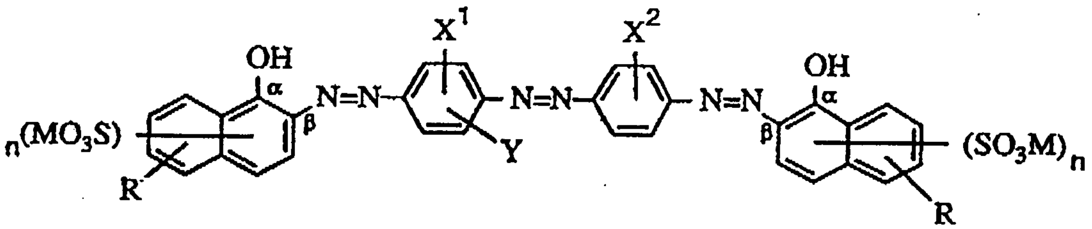

(1)

dans laquelle
R représente un atome d'hydrogène ou un groupe -OH, $-OR^1$, $-NH_2$, $-NHR^1$, $-NHCOR^1$, $-NHSO_2R^1$, $-NHCONH_2$ ou $-NHCONHR^1$, $R^1$ représentant un groupe alkyle ou aryle éventuellement substitué,
$X^1$ et $X^2$ représentent chacun, indépendamment l'un de l'autre, un atome d'hydrogène ou d'halogène, un groupe alkyle ou alcoxy éventuellement substitué, ou un groupe sulfo ou carboxy,
Y représente un atome d'halogène, un groupe alkyle ou alcoxy éventuellement substitué, ou un groupe sulfo ou carboxy,
M représente un atome d'hydrogène ou un équivalent d'un cation incolore, et
n vaut 1 ou 2,
les groupes OH placés en position alpha des noyaux naphtaléniques et les groupes azo placés en position bêta des noyaux naphtaléniques pouvant échanger leurs positions.

2. Procédé conforme à la revendication 1, **caractérisé** en ce que l'on utilise un colorant de formule (1) dans laquelle R représente un atome d'hydrogène, un groupe hydroxy ou un groupe amino.

3. Procédé conforme à la revendication 1, **caractérisé** en ce que l'on utilise un colorant de formule (1) dans laquelle les groupes OH sont placés en position alpha, et les groupes azo, en position bêta.

4. Procédé conforme à l'une des revendications 1 à 3, **caractérisé** en ce que l'on utilise un colorant de formule (1) dans laquelle $X^1$ et $X^2$ représentent chacun, indépendamment l'un de l'autre, un atome d'hydrogène ou un groupe méthyle ou méthoxy, et Y représente un groupe méthyle ou méthoxy.

**5.** Procédé conforme à la revendication 1, **caractérisé** en ce que l'on utilise un colorant de formule

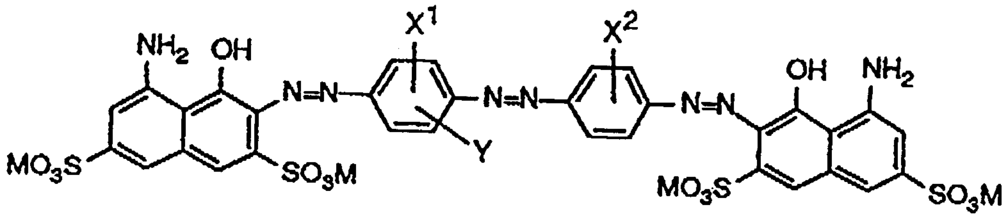

(2),

dans laquelle $X^1$, $X^2$ et Y ont les significations indiquées dans la revendication 1, et M représente un ion $Na^+$ ou $Li^+$ ou une alcanolamine en $C_4$-$C_6$ protonée.

**6.** Procédé conforme à la revendication 1, **caractérisé** en ce que l'on utilise un colorant de formule

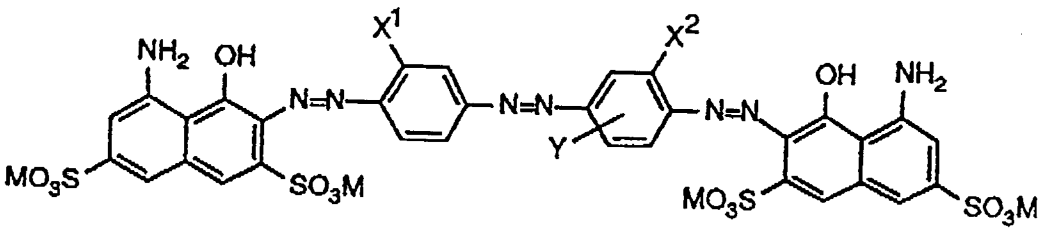

(3)

dans laquelle $X^1$ et $X^2$ représentent chacun, indépendamment l'un de l'autre, un atome d'hydrogène ou un groupe méthyle ou méthoxy, Y représente un groupe méthyle ou méthoxy et M représente un ion $Na^+$ ou $Li^+$ ou une alcanolamine en $C_4$-$C_6$ protonée.

**7.** Colorants de formule

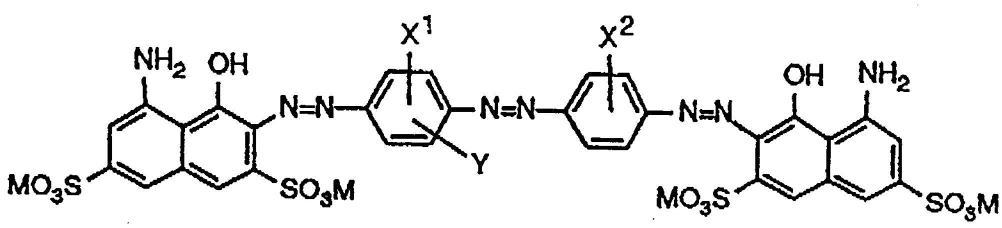

(2),

dans laquelle $X^1$, $X^2$ et Y ont les significations indiquées dans la revendication 1, et M représente un ion $Na^+$ ou $Li^+$ ou une alcanolamine en $C_4$-$C_6$ protonée.

**8.** Colorants de formule

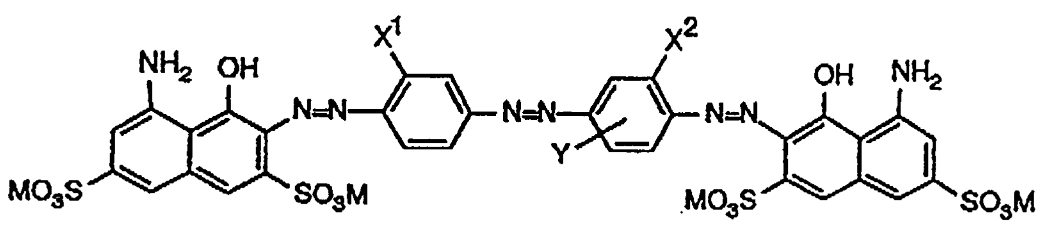

(3)

dans laquelle $X^1$ et $X^2$ représentent chacun, indépendamment l'un de l'autre, un atome d'hydrogène ou un groupe méthyle ou méthoxy, Y représente un groupe méthyle ou méthoxy et M représente un ion $Na^+$ ou $Li^+$ ou une alcanolamine en $C_4$-$C_6$ protonée.

**9.** Préparations solides de colorants, destinées à la teinture du papier, qui contiennent des colorants de formule (2) ou (3), conformes à la revendication 7 ou 8.

**10.** Solutions aqueuses concentrées de colorants de formule (2) ou (3), **caractérisées** en ce qu'elles contiennent de 10 à 30 % en poids de colorant, par rapport au poids total de solution.

**11.** Solutions aqueuses concentrées conforme à la revendication 10, **caractérisées** en ce qu'elles contiennent de 20 à 30 % en poids de colorant.

**12.** Solutions aqueuses concentrées conforme à la revendication 10 ou 11, **caractérisées** en ce que le colorant s'y trouve sous la forme d'un sel de lithium ou d'un sel d'alcanolamine, en particulier d'un sel de diéthanolamine ou de triéthanolamine.

**13.** Utilisation des préparations solides de colorants ou des solutions aqueuses concentrées, conformes à l'une des revendications 9 à 12, pour teindre du papier.

**14.** Papier teint selon le procédé conforme à la revendication 1.